# EUROPÄISCHE PATENTANMELDUNG

(11) **EP 3 114 934 A1**
(43) Veröffentlichungstag der Anmeldung: **11.01.2017**
(21) Anmeldenummer: 16400028.3
(22) Anmeldetag: 05.07.2016
(51) Int. Cl.: A01N 43/653, A01N 37/34, A01P 3/00

(54) **GETREIDEFUNGIZID UND VERFAHREN ZUR ANWENDUNG AN EINER GETREIDEPFLANZE**

(30) Priorität: 07.07.2015 DE 102015008977
(71) Anmelder: Spiess-Urania Chemicals GmbH, 20097 Hamburg (DE)
(72) Erfinder: NANNEN, David, 24116 Kiel (DE); LEHNE, Jürgen, 25596 Nienbüttel (DE); GLATTKOWSKI, Hans, 23568 Lübeck (DE)
(74) Vertreter: Patentanwälte Klickow & Partner Partnerschaftsgesellschaft mbB

(57) **Zusammenfassung**

Die Erfindung betrifft ein Getreidefungizid sowie ein Verfahren zur Anwendung eines Getreidefungizides an einer Getreidepflanze. In einem ersten Aspekt betrifft die vorliegende Erfindung ein Getreidefungizid, umfassend die fungiziden Wirkstoffe Fluquinconazol und Propiconazol sowie, optional, Chlorthalonil.

## Beschreibung

Die Erfindung betrifft ein Getreidefungizid sowie ein Verfahren zur Anwendung eines Getreidefungizides an einer Getreidepflanze.

Getreidefrüchte haben als Grundnahrungsmittel zur Ernährung einer zunehmenden Weltbevölkerung oder auch als Viehfutter eine nach wie vor fundamentale und noch zunehmende Bedeutung. Entsprechend wird ein möglichst umfassender und zuverlässiger Schutz vor Ernteverlusten durch Befall mit Schädlingen, beispielsweise Pilzen, angestrebt. Zu diesem Zweck werden regelmäßig Getreidefungizide eingesetzt, wobei es allerdings erwünscht ist, mögliche Umweltbelastungen durch den Einsatz der Fungizide so gering wie möglich zu halten. Darüber hinaus ist es wichtig, die Resistenzbildung gegenüber Fungiziden weitgehend zu minimieren.

Es besteht nach wie vor ein Bedarf an wirksamen Mitteln zum Schutz von Getreide vor Pilzbefall. Aufgabe der vorliegenden Erfindung ist es daher, ein solches Mittel bereit zu stellen.

Gelöst wird die Aufgabe in einer-Ausführungsvariante durch ein die fungiziden Wirkstoffe Fluquinconazol und Propiconazol umfassendes Getreidefungizid. In einer weiteren Ausführungsvariante wird die Aufgabe gelöst durch ein Verfahren zur Anwendung an einer Getreidepflanze auf einer Kulturfläche. In noch einer weiteren Ausführungsvariante wird die Aufgabe gelöst durch die Verwendung einer Fluquinconazol und Propiconazol sowie optional Chlorthalonil umfassenden Zusammensetzung zum Schutz von Getreide vor Pilzbefall.

In einem ersten Aspekt betrifft die vorliegende Erfindung ein Getreidefungizid, umfassend die fungiziden Wirkstoffe Fluquinconazol und Propiconazol.

Es hat sich überraschend herausgestellt, dass das die fungiziden Wirkstoffe Fluquinconazol und Propiconazol enthaltende erfindungsgemäße Getreidefungizid einen guten Schutz für Getreidepflanzen vor Pilzbefall bietet. Die Wirkstoffe zeigen eine sich ergänzende Wirkung und können sowohl protektiv als auch kurativ eingesetzt werden, um ein breites Spektrum von pilzbedingten Getreidekrankheiten, insbesondere Blattkrankheiten wie beispielsweise Blattseptoria, zu bekämpfen, die mit bekannten Fungiziden, insbesondere Triazol-Fungiziden, häufig nicht mehr ausreichend zu bekämpfen sind. Beispielsweise kann das erfindungsgemäße Getreidefungizid vorteilhaft zur Vorbeugung oder Behandlung von Blattseptoria, Rost, Netzfleckenkrankheit, Blattfleckenkrankheit und DTR-Blattdürre eingesetzt werden.

Unter einem "Fungizid" wird hier ein Pflanzenschutzmittel verstanden, bestehend aus oder umfassend eine Verbindung oder eine Zusammensetzung von Verbindungen mit antifungaler Wirkung. Insbesondere wird hierunter ein Mittel verstanden, das die pilzliche Infektion einer Pflanze verhindert und/oder das Wachstum von Pilzen und/oder von Pilzsporen in und/oder auf der Pflanze verhindert oder hemmt. Der Begriff bezieht sich nicht nur auf den oder die antifungalen Wirkstoffe selbst, sondern umfasst auch Zubereitungen bzw. Formulierungen davon, beispielsweise Suspoemulsionen.

Unter einem "Getreidefungizid" wird hier ein Fungizid verstanden, das zum Schutz von Getreide gegenüber Pilzbefall geeignet ist. Insbesondere wird mit dem Begriff "Getreidefungizid" eine Verbindung, Verbindungszusammensetzung oder eine Zubereitung bzw. Formulierung davon bezeichnet, die das Wachstum von Pilzen und/oder Pilzsporen verhindert oder hemmt, die Getreidepflanzen befallen und schädigen können.

Die Begriffe "antifungal" oder "fungizid" werden hier in Bezug auf die antipilzliche Wirkung einer Verbindung, Verbindungszusammensetzung, Zubereitung, Formulierung oder dergleichen synonym verwendet, sofern nicht ausdrücklich etwas anderes angegeben ist oder sich aus dem Zusammenhang ergibt.

Wenn hier die Begriffe "binäres Fungizid", "binäres Getreidefungizid", "ternäres Fungizid", "ternäres Getreidefungizid" oder auch "binäre Wirkstoffkombination", "binäre Mischung" oder "ternäre Wirkstoffkombination" bzw. "ternäre Mischung" verwendet werden, bedeutet dies, dass ein (Getreide-)Fungizid ausschließlich zwei ("binär") oder ausschließlich drei ("ternär") antifungale Wirkstoffe beinhaltet. Unter "Blattseptoria" wird hier eine durch den Pilz *Septoria tritici* (*Mycosphaerelle graminicola, Zymoseptoria tritici*), unter "Rost" eine beispielsweise durch den Pilz *Puccinia triticina,* unter DTR-Blattdürre eine durch *Pyrenophora* (*Drechsiera*) *tritici repentis,* unter "Netzfleckenkrankheit" eine durch den Pilz *Pyrenophora* (*Drechslera*) *teres,* unter Blattfleckenkrankheit eine durch den Pilz *Rhynchosporium secalis* (commune), und unter "Ramularia-Blattfleckenkrankheit" eine durch den Pilz *Ramularia colloy-cygni* hervorgerufene pflanzliche Erkrankung verstanden.

Unter "Getreide" werden Pflanzen der Familie der Süßgräser *(Poaceae,* früher *Gramineäe*), insbesondere solche, die wegen ihrer Körnerfrüchte kultiviert werden, oder deren Körnerfrüchte selbst verstanden. Auch Hybride aus verschiedenen Gattungen wie beispielsweise Triticale fallen unter den Begriff. Wichtige Getreidepflanzen sind Pflanzen der Gattungen *Triticum* (Weizen), *Secale* (Roggen), *Hordeum* (Gerste), *Oryza* (Reis), *Zea* (Mais), *Avena* (Hafer) sowie *Sorghum, Panicum, Pennisetum, Setaria, Eleusine, Eragrostis* etc. (Hirse). Beispiele für Getreide sind Winter- und Sommerweizen, Winter- und Sommergerste, Winter und Sommerroggen, Winter- und Sommertriticale, Winter- und Sommerhafer, Hartweizen *(Triticum durum),* Dinkel *(Triticum aestivum* subsp. spelta) und Emmer *(Triticum dicoccum).*

Mit "Fluquinconazol" (abgekürzt auch "FQC") wird 3-(2,4-Dichlorphenyl)-6-fluor-2-(1*H*-1,2,4-triazol-1-yl)-chinazolin-4-(3*H*)-on (CAS-Nr. 136426-54-5) gemäß folgender chemischer Formel (I) bezeichnet:

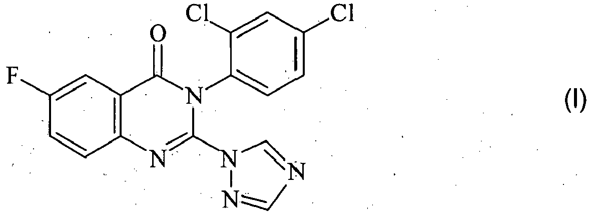

Fluquinconazol gehört zur Gruppe der DMI- ("demethylation ihhibitor"), SBI-("sterol biosynthesis inhibiting") bzw. Triazol- oder Conazol-Fungizide.

Unter "Propiconazol" (abgekürzt auch "Propi" oder "PPC") wird (2*RS*,4*RS*;2*RS*,4*SR*)-1-[2-(2,4-dichlorophenyl)-4-propyl-1,3-dioxolan-2-ylmethyl]-1*H*-1,2,4-triazol (CAS-Nr. 60207-90-1) gemäß folgender chemischer Formel (II) verstanden:

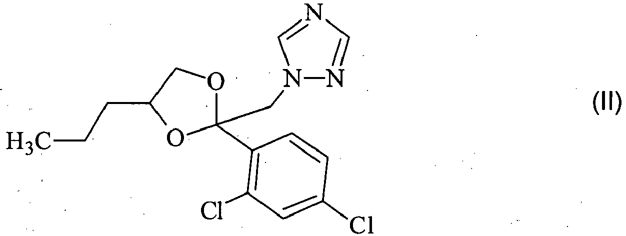

Propiconazol gehört ebenfalls zur Gruppe der DMI-, SBI- bzw. Triazol- oder Conazol-Fungizide.

Unter "Chlorthalonil" (abgekürzt auch "CTL") wird Tetrachlorisophthalonitril (CAS-Nr. 1897-45-6) gemäß folgender chemischer Formel (III) verstanden:

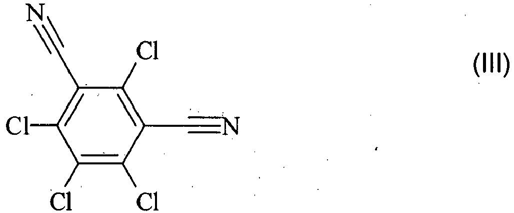

Wenn hier von einem "Schutz von Getreide vor Pilzbefall" gesprochen wird, ist damit ein Schutz durch fungizide Wirkung einer Verbindung, Zusammensetzung, Zubereitung, Formulierung oder dergleichen gemeint, der Teilphasen oder sämtliche Phasen einer Pilzinfektion umfassen kann, beispielsweise den Schutz vor einer initialen Pilzinfektion, das Auskeimen von Pilzsporen, das Wachstum des infizierenden Pilzes und die Ausbreitung auf oder in der Pflanze. Vorzugsweise umfasst der Ausdruck hier einen Schutz, der die Phasen von der Infektion bis vor Ausbruch der jeweiligen Symptome umfasst, d.h. einen Schutz mit protektivem und/oder kurativem, nicht jedoch mit eradikativem Charakter.

Unter einem "protektiven Schutz" oder einer "protektiven Wirkung" in Bezug auf ein Fungizid wird hier verstanden, dass die Infektion durch den Pilz oder zumindest dessen weitere Ausbreitung auf oder in der Pflanze oder Teilen davon präventiv von Anfang an verhindert bzw. gehemmt wird. Hierzu muss sich das Fungizid bereits in der Pflanze und/oder auf Pflanzenoberflachen befinden, bevor der Pilz die Pflanze befällt.

Unter einem "kurativen Schutz" oder einer "kurativen Wirkung" in Bezug auf ein Fungizid wird hier verstanden, dass dieses in der Lage ist, die weitere Ausbreitung des Pilzes in der Pflanze auch nach einer Infektion, vorzugsweise jedoch noch innerhalb der Latenzzeit des Erregers, d.h. vor Ausbruch der Symptome, zu verhindern oder zu hemmen.

Unter einem "eradikativen Schutz" oder einer "eradikativen Wirkung" in Bezug auf ein Fungizid wird hier verstanden, dass dieses in der Lage ist, eine vorhandene Infektion auch nach Ausbruch von Befallssymptomen erfolgreich zu bekämpfen.

Unter einer "Suspoemulsion" oder "Suspo-Emulsion" (abgekürzt auch "SE") wird eine Mischung aus Suspension(en) und Emulsion(en) verstanden. Bei einer Suspoemulsion liegt mindestens ein wirksamer fester Bestandteil in wässriger Suspension vor, während mindestens ein weiterer wirksamer Bestandteil in. einer Öl- bzw. Lösungsmittel-Wasser-Emulsion vorliegt. Ein Beispiel für eine binäre Suspoemulsion ist eine Formulierung, bei der Fluquinconazol als suspendierter Feststoff in der wässrigen Phase der Formulierung vorliegt, während Propiconazol in einem organischen Lösungsmittel gelöst und mit Hilfe von Emulgatoren in der wässrigen Phase emulgiert ist. Ein Beispiel für eine ternäre Suspoemulsion ist eine Formulierung, bei der Fluquinconazol und Chlorthalonil als suspendierte Feststoffe in der wässrigen Phase der Formulierung vorliegen, während Propiconazol in einem organischen Lösungsmittel gelöst und mit Hilfe von Emulgatoren in der wässrigen Phase emulgiert ist. Für den Begriff "Suspoemulsion" wird hier gegebenenfalls auch der Aüsdruck "SE-Fotrnulierung" verwendet.

Wenn hier ein Zahlenbereich angegeben ist, schließt dies auch jeden Einzelwert oder jeden kleineren Bereich innerhalb des Zahlenbereiches ein, auch wenn dieser nicht ausdrücklich genannt ist. Beispielsweise schließt ein Zahlenbereich von 20-125 g/ha auch Einzelwerte von beispielsweise 21, 42, 84 oder 85 g/ha oder einen Zahlenbereich von 42-84, 55-60 oder 90-125 g/ha ein.

Bei dem erfindungsgemäßen Getreidefungizid können Fluquinconazol und Propiconazol die einzigen antifungalen Wirkstoffe sein und ein binäres Getreidefungizid bilden. Ein solches binäres erfindungsgemäßes Getreidefungizid ist insbesonder für einen protektiven und/oder kurativen Einsatz vorgesehen. Das Gewichtsverhältnis von Fluquinconazol zu Propiconazol (FQC:PPC) beträgt dabei bevorzugt 0,25-1,5:1, bevorzugt 0,5-1,25:1, besonders bevorzugt 0,5-1:1 oder 1:1.

In einer bevorzugten Ausführungsform enthält das erfindungsgemäße Getreidefungizid jedoch ferner den fungiziden Wirkstoff Chlorthalonil. Besonders bevorzugt handelt es sich dann um ein ternäres Getreidefungizid, d.h. das Getreidefungizid enthält vorzugsweise als antifungale Wirkstoffe ausschließlich Fluquinconazol, Propiconazol und Chlorthalonil. Das Gewichtsverhältnis von Fluquinconazol zu Propiconazol zu Chlorthalonil (FQC:PPC:CTL) beträgt dabei vorzugsweise 0,25-1,5:1:5-10, bevorzugt 0,5-1,25:1:7-9, besonders bevorzugt 0,5-1:1:8 oder 1:1:8.

Die ternäre Kombination aus Fluquinconazol, Propiconazol und Chlorthalonil hat sich als besonders vorteilhaft insbesondere zur protektiven Bekämpfung von Pilzbefall bei Getreide erwiesen: Beispielsweise ist das erfindungsgemäße ternäre Getreidefungizid auch wirksam zur Bekämpfung von Ramularia-Blattfleckenkrankheit bei Gerste. Darüber hinaus erhöht sich im Vergleich zur erfiridungsgemäßen binären Kombination aus Fluquinconazol und Propiconazol auch die protektive Wirksamkeit beispielsweise gegenüber Blattseptoria. Da Chlorthalonil als so genannter "Multi-site-Inhibitor" den Pilzstoffwechsel nicht nur an einer, sohndern an mehreren Stellen angreift, ist die Kombination mit Chlorthalonil zudem auch vorteilhaft zur Verminderung oder Verlangsamung der Ausbildung von Resistenzen gegenüber den Triazol-Fungiziden Fluquinconazol und Propiconazol. Das erfindungsgemäße Getreidefungizid kann beispielsweise als Tankmischung der Einzelkomponenten Fluquinconazol und Propiconazol bzw. Fluquinconazol, Propiconazol und Chlorthalonil vorliegen, wobei die Tankmischung auch durch Mischen von Formulierungen der jeweiligen Einzelwirkstoffe hergestellt sein kann. Bevorzugt liegen die fungiziden Wirkstoffe jedoch in einer Suspoemulsion vor. Beispielweise kann Fluquinconazol als Feststoff in der wässrigen Phase einer solchen Suspoemulsion vorliegen, während Propiconazol in Lösungsmittel gelöst in der wässrigen Phase mithilfe von Emulgatoren emulgiert ist. Im Falle einer ternären Wirkstoffkombination aus fluquinconazol, Propiconazol und Chlorthalonil liegen Fluquinconazol und Chlorthalonil vorzugsweise als suspendierte Feststoffe in der wässrigen Phase der Formulierung vor, während Propiconazol in Lösungsmittel gelöst in der wässrigen Phase der Suspoemulsion mithilfe von Emulgatoren emulgiert ist.

Der Massenanteil (w) der fungiziden Wirkstoffe in einem erfindungsgemäßen Getreidefungizid, das beispielsweise in Form einer Tankmischung oder einer Suspoemulsion vorliegen kann, d.h. der Massenanteil der fungiziden Wirkstoffe, bezogen auf die Gesamtmasse des Gemisches, beispielsweise der Tankmischung oder Suspoemulsion, beträgt insgesamt mindestens 5 %. Der Massenanteil (w/w) von Fluquinconazol kann beispielsweise 1,5 bis 5 %, vorzugsweise 2-4,5 %, betragen. Der Massenanteil von Propiconazol kann beispielsweise 1,5 bis 5 %, vorzugsweise 2-4,5 %, betragen. Der Massenanteil von Fluquinconazol kann beispielsweise 2,01 % und der von Propiconazol beispielsweise 3,94 % betragen, oder der Massenanteil von Fluquinconazol kann beispielsweise 4,02 % und der von Propiconazol beispielsweise 3,94 % betragen. Diese Anteile von Fluquinconazol und Propiconazol, sind vorteilhaft sowohl in binären als auch in ternären Kombinationen. Insbesondere in ternären Mischungen ist der Massenanteil der fungiziden Wirkstoffe bevorzugt jedoch insgesamt höher und kann beispielsweise mindestens 25 %, bevorzugt mindestens 30 % betragen. Der Massenanteil von Chlorthalonil beträgt 25-35 %, vorzugsweise 27-33 %, weiter bevorzugt 28-32 %, besonders bevorzugt 29-31 %.

Eine geeignete Suspoemulsion eines erfindungsgemäßen ternären Getreidefungizids kann beispielsweise folgende Zusammensetzung aufweisen (EO = Ethylenoxid, PO = Propylenoxid; die rechte Spalte enthält volumenbezogenene Konzentrationsangaben zu den enthaltenen Wirkstoffen):

| Wirkstoff: | Gew.-% (w/w) | g/l |
|---|---|---|
| Fluquinconazol | 2,01 oder 4,02 | 21 oder 42 |
| Propiconazol | 3,94 | 42 |
| Chlorthalonil | 30,89 | 333 |
| Formulierungshilfsstoff: Isotridecylethoxylat (CAS 78330-21-9) | 5-10 (z.B. 6) | |
| Rhizinusölethoxylat (CAS 61791-12-6) | 0-5 (z.B. 1) | |
| Schweflige Säure, Mono-Natriumsalz, Reaktionsprodukt aus Kresol, Formaldehyd, Nonylphenolpolymer (CAS 1155354-44-9) | 0-5 (z.B. 3) | |
| EO/PO Blockcopolymer, phosphatiert, Na-Salz | 0-5 (z.B. 3,5) | |
| Solvesso 150 NO Aromatischer Kohlenwasserstoff (CAS 64742-94-5) | 5-20 (z. B. 10) | |
| Glyzerin (CAS 56-81-0) | 5-10 (z.B. 6) | |
| Deionisiertes Wasser (CAS 7732-18-5) | 30-40 (ad 100) | |

In einem weiteren Aspekt betrifft die vorliegende Erfindung auch ein Verfahren zur Anwendung an einer Getreidepflanze auf einer Kulturfläche. Das erfindungsgemäße Verfahren umfasst das Applizieren eines erfindungsgemäßen Getreidefungizids gemäß dem oben beschriebenen ersten Aspekt der Erfindung auf die Getreidepflanze und/oder die Kulturfläche in einer Menge, die wirksam ist, um den Pilzbefall der Getreidepflanze zu verhindern oder im Vergleich zu einer unbehandelten Getreidepflanze zu vermindern. Der Bezug auf eine Menge, die wirksam ist, um den "Pilzbefall einer Getreidepflanze im Vergleich zu einer unbehandelten Getreidepflanze zu vermindern", bezieht sich auf eine Menge des erfindungsgemäßen Getreidefungizids, deren Applikation bei einer Getreidepopulation dazu führt, dass diese im Vergleich zu einer unbehandelten, d.h. nicht mit einem Getreidefungizid behandelten, ansonsten aber unter vergleichbaren Bedingungen angezogenen Population desselben Getreides im Durchschnitt einen verminderten Pilzbefall aufweist. Vorzugsweise ist die applizierte Menge Fungizid ausreichend, um im Vergleich zu einer unbehandelten Getreidepflanzenpopulation eine Minderung des Pilzbefalls um mindestens 60 %, vorzugsweise mindestens 70 % oder 75 %, besonders bevorzugt um mindestens 80 %, 85 % oder 90 % zu bewirken.

Die Applikation des erfindungsgemäßen Getreidefungizids kann wie im Stand der Technik allgemein bekannt erfolgen, und beispielsweise das Spritzen einer ausreichenden Menge Fungizids zu einem geeigneten Zeitpunkt vor oder nach der Aussaat des Getreides umfassen. Das erfindungsgemäße Getreidefungizid kann dabei einmalig oder gegebenenfalls auch zwei oder mehrmals hintereinander appliziert werden.

In einer Ausführungsform des erfindungsgemäßen Verfahrens wird ein Fluquinconazol und Propiconazol enthaltendes binäres Getreidefungizid appliziert, wobei Fluquinconazol und Propiconazol jeweils, unabhängig voneinander, in einer maximalen Aufwandmenge von 125 g/ha, vorzugsweise in einer Aufwandmenge von 20-125 g/ha, bevorzugt 40-125 g/ha, weiter bevorzugt von 60-125 g/ha, besonders bevorzugt von 80-125 g/ha oder 85-125 g/ha appliziert werden. Alternativ oder gegebenenfalls auch zusätzlich wird in einer bevorzugten Ausführungsform des erfindungsgemäßen Verfahrens ein Fluquinconazol, Propiconazol und Chlorthalonil enthaltendes ternäres Getreidefungizid appliziert, wobei Fluquinconazol und Propiconazol jeweils, unabhängig voneinander, in einer maximalen Aufwandmengen von 125 g/ha, vorzugsweise in einer Aufwandmenge von 20-125 g/ha; bevorzugt 40-125 g/ha, weiter bevorzugt von 60-125 g/ha, besonders bevorzugt von 80-125 g/ha oder 85-125 g/ha appliziert werden und Chlorthalonil in einer maximale Aufwandmenge von 1000 g/ha, bevorzugt in einer Aufwandmenge von 300-1000 g/ha, weiter bevorzugt 600-1000 g/ha, besonders bevorzugt von 650-1000 g/ha appliziert wird. Die angegebenen Aufwandmengen beziehen sich dabei auf eine Getreidekultur beziehungsweise ein Anbaujahr. Die Applikation kann beispielsweise durch ein- oder mehrmaliges Spritzen einer Tankmischung einer erfindungsgemäßen Wirkstoffkombination oder einer erfindungsgemäßen Getreidefungizid-Suspoemulsion erfolgen.

Die Getreidepflanze kann eine Pflanze sein, die ausgewählt ist aus den Gattungen Triticum, Secale, Hordeum, Oryza, Zea, Avena, Sorghum, Panicum, Pennisetum, Setaria, Eleusine und Eragrostis. Beispielsweise kann es sich bei der Getreidepflanze um Winter- oder Sommerweizen, Winter- oder Sommergerste, Winter oder Sommerroggen, Winter- oder Sommertriticale, Winter- oder Sommerhafer, Hartweizen, Dinkel oder Emmer handeln.

In einem dritten Aspekt betrifft die Erfindung auch die Verwendung eines Fluquinconazol und Propiconazol sowie optional Chlorthalonil umfassenden Getreidefungizids zur Verhinderung oder Verminderung des Pilzbefalls von Getreidepflanzen.

Die Erfindung wird im Folgenden anhand von Ausführungsbeispielen rein zu Veranschaulichungszwecken näher erläutert.

### Beispiele

1. Gewächshausuntersuchungen zum Wirkungsspektrum von formulierten Einzelwirkstofffungiziden.

Es wurden Gewächshausuntersuchungen zum Wirkungsspektrum formulierter Einzelwirkstofffungizide an Weizen und Gerste durchgeführt. Die untersuchten Pflanzenkrankheiten und Testbedingungen sind in Tabelle 1 wiedergegeben.

**Tabelle 1: An Weizen und Gerste untersuchte Pflanzenkrankheiten und Testbedingungen. Angegeben sind die untersuchten Krankheiten bzw. deren Erreger, die untersuchte Getreidearten (Weizen oder Gerste), die Anzahl der Tage vor (bei protektivem Einsatz des Wirkstoffs) oder nach (bei kurätivem Einsatz des Wirkstoffs) Inokulation mit dem Erreger sowie jeweilige Referenzmengen von "Input Classic". dbi = "days before inoculation" = Anzahl Tage der Applikation des Wirkstoffs vor Inokulation des Erregers; dai = "days after inoculation" = Anzahl Tage der Applikation des Wirkstoffs nach Inokulation des Erregers.**

| Erreger | Krankheit | GetreideProtektiv | Kurativ | Input Classic |
|---|---|---|---|---|
| Septoria tritici | Blattseptoria | Weizen 1 dbi | 5 dai | 0,9 l/ha |
| Puccinia triticina | Rost | Weizen 1 dbi | 3 dai | 0,9 l/ha |
| Pyrenophora tritici repentis | DTR-Blattdürre | Weizen 1 dbi | 3 dai | 0,9 l/ha |
| Pyrenophora teres | Netzflecken | Gerste 1 dbi | 3 dai | 0,75 l/ha |
| Rhynchosporium secalis | Blattflecken | Gerste 1 dbi | 3 dai | 0,75 l/ha |

"Input Classic" (Bayer CropScience AG, D-40789 Monheim, Deutschland) ist ein Gemisch aus 160 g/l Prothioconazol und 300 g/l Spiroxamin und gilt derzeit als stärkste Azol-Fungizid-Ferfigmischung für Getreide. Die angegebenen Dosiermengen beziehen sich auf die zweckmäßige Anwendung von "Input Classic" bei Weizen und Gerste.

Die getesteten Wirkstoffe und deren verwendete Mengen sind in Tabelle 2 angegeben.

**Tabelle 2: Getestete Wirkstoffe und eingesetzte Mengen. Angegeben sind auch Produktbezeichnungen eingesetzter kommerziell erhältlicher fungizidformulierungen. Fluquinconazol lag in einer Eigenformulierung vor. SC = Suspensionskonzentrat; EC = Emulsionskonzentrat. Epoxion, Mirage: ADAMA Deutschland GmbH, Köln; Zolex: ITACA S.R.L., Bergamo, Italien; Sihconil: SINON Corporation, Taichung, Taiwan.**

| Wirkstoff | Menge Wirkstoff [g/ha] | Produkt/Formulierung |
|---|---|---|
| Epoxiconazol | 125 | Epoxion, 125 g/L SC |
| Fluquinconazol | 125 | SPU 05520, 100 g/L SC, + Hilfsstoff |
| Propiconazol | 125 | Zolex 250 g/L EC |
| Prochloraz | 540 | Mirage, 450 g/L EC |
| Chlorthalonil | 1000 | Sinconil, 500 g/L SC |

Die maximal getesteten Aufwandmengen der Wirkstoffe pro Hektar (ha) beziehen sich auf eine Getreidekultur bzw. ein Anbaujahr und orientieren sich an den im Rahmen der europäischen Wirkstoffzulassung geprüften sicheren Anwendungen der Beispielformulierungen.

Die Wirksamkeit der getesteten Fungizid-Formulierungen ist in Tabelle 3 angegeben. Die Prozentangaben beziehen sich auf die Befallsreduktion im Vergleich zur unbehandelten Kontrolle, d.h. der Befall der Kontrolle wurde gleich 100 % gesetzt.

**Tabelle 3: Wirksamkeit getesteter formulierter Einzelwirkstoffe gegen Getreidekrankheiten als prozentuale Reduktion befallener Pflanzenteile gegenüber der unbehandelten Kontrolle (=100%) bei maximaler Wirkstoffmenge (s. Tab. 2). Als Referenz-Fungizid wurde "Input Classic" (Prothioconazol plus Spiroxamin) eingesetzt.**

| Erreger (Krankheit) | | | | |
|---|---|---|---|---|
| Septoria tritici (Blattseptoria) | Puccinia triticina (Rost) | Pyrenophora teres (Netzflecken) | Rhynchosporium secalis (Blattflecken) | Pyrenophora tritici repentis (DTR-Blattdürre) |

| Protektiv: Wirkstoff | | | | | |
|---|---|---|---|---|---|
| Input Classic | 93 | 95 | 86 | 79 | 88 |
| Epoxiconazol | 89 | 92 | 83 | 72 | 61 |
| Fluquinconazol | 86 | 85 | 36 | 58 | 46 |
| Propiconazol | 72 | 91 | 77 | 63 | 82 |
| Prochloraz | 82 | 89 | 71 | 50 | 36 |
| Chlorthalonil | 85 | 84 | 47 | 39 | 28 |

| Kurativ: Wirkstoff | | | | | |
|---|---|---|---|---|---|
| Input Classic | 82 | 93 | 83 | 74 | 79 |
| Epoxiconazol | 74 | 90 | 76 | 64 | 49 |
| Fluquinconazol | 77 | 72 | 27 | 31 | 32 |
| Propiconazol | 65 | 82 | 69 | 38 | 71 |
| Prochloraz | 56 | 52 | 20 | 21 | 13 |

Für den Bekämpfungserfolg durch Fungizide kann folgender anerkannter Bewertungsschlüssel verwendet werden:
100-80% Bekämpfungserfolg = gut wirksam,
79-60% Bekämpfungserfolg = moderat wirksam,
59-40% Bekämpfungserfolg = Befallsreduktion.

Aus Tabelle 3 ergibt sich, dass die Stärken von Fluquinconazol vor allem in der Bekämpfung der Blattseptoria und kurativ in der Bekämpfung von Rostkrankheiten liegen. Die Stärken von Propiconazol liegen vor allem in der Bekämpfung von Rostkrankheiten, DTR-Blattdürre und Netzflecken. Die Stärken von Chlorthalonil liegen in der protektiven Bekämpfung von Blattseptoria und Rostkrankheiten.

### 2. Gewächshausuntersuchungen zur Wirksamkeit verschiedener Tankmischungen von Einzelwirkstofffungiziden u.a. im Vergleich zu erfindungsgemäßen Formulierungen

Es wurden Gewächshausuntersuchungen an Weizen zur Blattseptoria und an Gerste zu Blattflecken vorgenommen.

### 2.1 Untersuchungen zur Blattseptoria an Weizen

Ein Septoria-tritici-Isolat Tibb-2 (s. Marzani, Qasim Abdulla 2011, Fungicide resistance and efficacy for control of Pyrenophora teres and Mycosphaerella graminicola on barley and wheat, Doktorarbeit, Universität Nottingham, http://eprints.nottingham.ac.uk/id/eprint/12633; Triazol-R-Gruppe, Aminosäureaustausche L50S, S188N, A379G, 1381V, N513K in Lanosterol-14-alpha-demethylase (CYP51; EC 1.14.13.70)) wurde auf Kartoffel-Dextrose-Agar (PDA), versetzt mit Penicillin und Streptomycin, um mögliche bakterielle Kontaminationen zu eliminieren, für 6 Tage bei 20 °C angezogen. Dieses Triazol-unempfindliche Isolat (welches typisch ist für viele heutige Isolate) wurde gewählt, um ein für gewöhnliche Wirksamkeiten im Feldeinsatz repräsentatives Niveau der Befallskontrolle durch die getesteten Fungizide sicherzustellen.

Sporensuspensionen wurden durch Überschichten der Platten mit sterilem destilliertem Wasser und sanftes Schaben hergestellt. Die Sporensuspensionen wurden mittels Hämocytometer-Zählungen und entsprechende Verdünnung auf 10⁶ Konidien pro mL eingestellt, bevor sie schließlich in Kartoffel-Dextrose-Bouillon, versetzt mit 1,5 g/L Gelatine und 0,5 g/L Natriumoleat, resuspendiert wurden.

Der Septoria-empfindliche Winter-Weizen-Cultivar "Riband" wurde in Levington-M3-Kompost angepflanzt. Insgesamt 12 Samen wurden in einen 9-cm-Topfgepflanzt und bis zum Wachstumsstadium 12 angezogen. Die Pflanzen wurden in einem Raum mit kontrollierter Umgebung untergebracht, mit einer Tagestemperatur von 20 °C und einer Nachttemperatur von 15 °C, mit einer 16-h-Fotoperiode, bei einer fotosynthetischen Photonenflussdichte von ungefähr 200 µmol m⁻²s⁻¹. Die Pflanzen wurden mit S. tritici inokuliert durch Aufsprühen von Sporensuspensionen bei 10⁶ Sporen ml⁻¹ bis kurz vor dem Ablaufen. Drei parallele Töpfe wurden pro Behandlung verwendet. Die Pflanzen wurden für 48 Stunden in versiegelten, transparenten Anzuchtkästen angeordnet, um eine hohe relative Luftfeuchtigkeit aufrecht zu erhalten und sicherzustellen, dass freies Wasser auf Blättern verblieb. Protektive Fungizid-Besprühungen wurden 24 h vor Inokulation und kurative Fungizid-Applikationen wurden 5 d nach der Inokulation vorgenommen. Die Behandlungen wurden innerhalb des Anzuchtraums randomisiert.

Alle Fungizide wurden unter Verwendung eines kalibrierten Handdrucksprühers bei der äquivalenten Rate von 200 L Wasser pro Hektar appliziert. Dies wurde erreicht durch Platzieren von zu behandelnden Pflanzen auf einer 1-m²-Fläche und Applizieren von 20 mL Fungizid-Sprays. Die Anwendungen, die für alle neun Fungizidkombinationen vorgenommen wurden, wurden sowohl mit der Hälfte (s. Tabelle 4) als auch mit einem Viertel der empfohlenen Rate vorgenommen. Unbehandelte Pflanzen dienten als Kontrolle.

Auswertungen wurden 18-19 Tage nach Inokulation durchgeführt, indem die Fläche von 30 inokulierten Blättern (Blätter 1 und 2) bewertet wurde, die Septoria-Nekrose zeigten. Pflanzen wurden in zufälliger Reihenfolge anhand eines Schlüssels bewertet, der die Blätter als 0, 1, 5, 10, 25, 50, 75 oder 100% nekrotisch einstufte. Zur Sicherheit wurde 24 Tage nach Inokulation eine subjektive Bewertung vorgenommen, um sicherzugehen, dass der Schutz anhielt und nicht lediglich eine verzögerte Krankheitsentwicklung vorlag.

**Tabelle 4: Fungizid-Kombinationen zur Untersuchung der Bekämpfung von Blattseptoria bei Weizen und von Blatffleckenkrankheit bei Gerste. FQC = Fluquinconazol, CTL = Chlorthalonil, PPC = Propiconazol; UC = Unbehandelte Kontrolle, SE = Suspoemulsion, SC = Suspensionskonzentrat; EC = Emulsionskon-zentrat.**

| Behandlung | Produkt | Wirkstoff(e) | Wirkstoffgehalt [g/L] | Dosiermenge [L/ha] | Wirkstoffmenge [g/ha] |
|---|---|---|---|---|---|
| 1 | UC | | | | |
| 2 | Input Classic | Prothioconazol | 160 | 0,90 | 144+270 |
| | | + Spiroxamin | 300 | | |
| 3 | SPU 05860-F-0-SC | Fluquinconazol | 100 | 0,84 | 84 |
| 4 | SPU 05860-F-0-SC | Fluquinconazol | 100 | 0,42 | 42 |
| 5 | SPU 05860-F-0-SC | Fluquinconazol | 100 | 0,21 | 21 |
| 6 | SPU 04440-F-0-SC | Chlorthalonil | 500 | 1,33 | 665 |
| 7 | SPU 04440-F-0-SC | Chlorthalonil | 500 | 0,67 | 333 |
| 8 | SPU 05170-F-0-EC | Propiconazol | 250 | 0,34 | 85 |
| 9 | SPU 05170-F-0-EC | Propiconazol | 250 | 0,17 | 42 |
| 10 | SPU 05860-F-0-SC | Fluquinconazol | 100 | 0,84 | 84 |
| | SPU 05170-F-0-EC | Propiconazol | 250 | 0,34 | 85 |
| 11 | SPU 05860-F-0-SC | Fluquinconazol | 100 | 0,42 | 42 |
| | SPU 05170-F-0-EC | Propiconazol | 250 | 0,34 | 85 |
| 12 | SPU 05860-F-0-SC | Fluquinconazol | 100 | 0,42 | 42 |
| | SPU 05170-F-0-EC | Propiconazol | 250 | 0,17 | 42 |
| 13 | SPU 05860-F-0-SC | Fluquinconazol | 100 | 0,21 | 21 |
| | SPU 05170-F-0-EC | Propiconazol | 250 | 0,17 | 42 |
| 14 | SPU 05860-F-0-SC | Fluquinconazol | 100 | 0,42 | 42 |
| | SPU 04440-F-0-SC | Chlorthalonil | 500 | 1,33 | 665 |
| 15 | SPU 05860-F-0-SC | Fluquinconazol | 100 | 0,42 | 42 |
| | SPU 04440-F-0-SC | Chlorthalonil | 500 | 0,67 | 333 |
| 16 | SPU 05860-F-0-SC | Fluquinconazol | 100 | 0,21 | 21 |
| | SPU 04440-F-0-SC | Chlorthalonil | 500 | 0,67 | 333 |
| 17 | SPU 05170-F-0-EC | Propiconazol | 250 | 0,34 | 85 |
| | SPU 04440-F-0-SC | Chlorthalonil | 500 | 1,33 | 665 |
| 18 | SPU 05170-F-0-EC | Propiconazol | 250 | 0,17 | 42 |
| | SPU 04440-F-0-SC | Chlorthalonil | 500 | 0,67 | 333 |
| 19 | SPU 05880-F-0-SE | FQC+PPC+CTL | 42+42+333 | 2,00 | 84+84+666 |
| 20 | SPU 05860-F-0-SC | Fluquinconazol | 100 | 0,84 | 84 |
| | SPU 05170-F-0-EC | Propiconazol | 250 | 0,34 | 85 |
| | SPU 04440-F-0-SC | Chlorthalonil | 500 | 1,33 | 665 |
| 21 | SPU 05890-F-0-SE | FQC+PPC+CTL | 21+42+333 | 2,00 | 42+84+666 |
| 22 | SPU 05860-F-0-SC | Fluquinconazol | 100 | 0,42 | 42 |
| | SPU 05170-F-0-EC | Propiconazol | 250 | 0,34 | 85 |
| | SPU 04440-F-0-SC | Chlorthalonil | 500 | 1,33 | 665 |
| 23 | SPU 05880-F-0-SE | FQC+PPC+CTL | 42+42+333 | 1,00 | 42+42+333 |
| 24 | SPU 05860-F-0-SC | Fluquinconazol | 100 | 0,42 | 42 |
| | SPU 05170-F-0-EC | Propiconazol | 250 | 0,17 | 42 |
| | SPU 04440-F-0-SC | Chlorthalonil | 500 | 0,67 | 333 |
| 25 | SPU 05890-F-0-SE | FQC+PPC+CTL | 21+42+333 | 1,00 | 21+42+333 |
| 26 | SPU 05860-F-0-SC | Fluquinconazol | 100 | 0,21 | 21 |
| | SPU 05170-F-0-EC | Propiconazol | 250 | 0,17 | 42 |
| | SPU 04440-F-0-SC | Chlorthalonil | 500 | 0,67 | 333 |

Die Behandlungen 2-9 betreffen Einzelformulierungen der Wirkstoffe, die Behandlungen 10-18 jeweils Tankmischungen umfassend zwei Wirkstoffe, die Behandlungen 19, 21, 23 und 25 jeweils Suspoemulsionen (SE) aus Fluquinconazol (FQC), Propiconazol (PPC) und Chlorthalonil (CTL), die Behandlungen 20, 22, 24 und 26 jeweils Tankmischungen aus den Einzelwirkstoffen Fluquinconazol, Propiconazol und Chlorthalonil

Die Zusammensetzung der verwendeten Suspoemulsionen SPU 05880-F-0-SE und SPU 05890-F-0-SE aus Fluquinconazol (FQC), Propiconazol (PPC) und Chlorthalonil (CTL) sind in den Tabellen 5 und 6 wiedergegeben.

**Tabelle 5: Suspoemulsion SPU 05880-F-0-SE. Fluquinconazol und Chlorthalonil liegen als suspendierte Feststoffe in der wässrigen Phase der Formulierung vor. Propiconazol wird in Lösungsmittel gelöst und in der wässrigen Phase mit Hilfe von Emulgatoren emulgiert.**

| Wirkstoff: | Gew.-% (w/w) | g/l |
|---|---|---|
| Fluquinconazol | 4,02 | 42 |
| Propiconazol | 3,94 | 42 |
| Chlorthalonil | 30,89 | 333 |
| Formulierungshilfsstoff: | | |
| Isotridecylethoxylat (CAS 78330-21-9) | 6 | |
| Rhizinusölethoxylat (CAS 61791-12-6) | 1 | |
| Schweflige Säure, Mono-Natriumsalz, Reaktionsprodukt aus Kresol, Formaldehyd, Nonylphenolpolymer (CAS 1155354-44-9) | 3 | |
| EO/PO Blockcopolymer, phosphatiert, Na-Salz | 3,5 | |
| Solvesso 150 NO Aromatischer Kohlenwasserstoff (CAS 64742-94-5) | 10 | |
| Glyzerin (CAS 56-81-0) | 6 | |
| Deionisiertes Wasser (CAS 7732-18-5) | 31,65 | |

**Tabelle 6: Suspoemulsion SPU 05890-F-0-SE. Fluquinconazol und Chlorthalonil liegen als suspendierte Feststoffe in der wässrigen Phase der Formulierung vor. Propiconazol wird in Lösungsmittel gelost und in der wässrigen Phase mit Hilfe von Emulgatoren emulgiert.**

| Wirkstoff: | Gew.-% (w/w) | g/l |
|---|---|---|
| Fluquinconazol | 2,01 | 42 |
| Propiconazol | 3,94 | 42 |
| Chlorthalonil | 30,89 | 333 |
| Formulierungshilfsstoff: | | |
| Isotridecylethoxylat (CAS 78330-21-9) | 6 | |
| Rhizinusölethoxylat (CAS 61791-12-6) | 1 | |
| Schiweflige Säure, Mono-Natriumsalz, Reaktionsprodukt aus Kresol, Formaldehyd, Nonylphenolpolymer (CAS 1155354-44-9) | 3 | |
| EO/PO Blockcopolymer, phosphatiert, Na-Salz | 3,5 | |
| Solvesso 150 NO Aromatischer Kohlenwasserstoff (CAS 64742-94-5) | 10 | |
| Glyzerin (CAS 56-81-0) | 6 | |
| Deionisiertes Wasser (CAS 7732-18-5) | 33,66 | |

Die Ergebnisse hinsichtlich der Wirksamkeit erfindungsgemäßer binärer Mischungen aus Fluquinconazol und Propiconazol sowie ternärer Gemische aus Fluquinconazol, Propiconazol und Chlorthalonil bei der Bekämpfung von Blattseptoria bei Weizen sind in Tabelle 7 zusammengefasst.

**Tabelle 7: Wirksamkeit (% Befallsreduktion gegenüber der Kontrolle) erfindungsgemäßer Wirkstoffkombinationen als Tankmischung oder Formulierung gegen Blattseptoria bei Weizen. FQC = Fluquinconazol, CTL = Chlorthalonil, PPC = Propiconazol, TM = Tankmischung, F = Formulierung.**

| | | | | Wirksamkeit (%) | | | |
|---|---|---|---|---|---|---|---|
| | Wirkstoffmengen (g/ha) | | | Protektiv | | Kurativ | |
| Erfindungsgemäße Kombination (Behandlung(en)) | FQC | PPC | CTL | TM | F | TM | F |
| 1 (10) | 84 | 85 | - | 88 | - | 78 | - |
| 2 (11) | 42 | 85 | - | 81 | - | 71 | - |
| 3 (12) | 42 | 42,5 | - | 81 | - | 69 | - |
| 4 (13) | 21 | 42,5 | - | 72 | - | 58 | - |
| 5 (F=19, TM=20) | 84 | 85 | 665 | 95 | 98 | 80 | 87 |
| 6 (F=21, TM=22) | 42 | 85 | 665 | 87 | 93 | 70 | 76 |
| 7 (F=23, TM=24) | 42 | 42,5 | 333 | 82 | 91 | 78 | 83 |
| 8 (F=25, TM=26) | 21 | 42,5 | 333 | 84 | 86 | 60 | 66 |

Unter Heranziehung des obigen Bewertungsschlüssels zeigt Tabelle 7, dass sich hinsichtlich der erfindungsgemäßen binären Wirkstoffkombination Fluquinconazol (FQC) und Propiconazol (PPC) für Tankmischungen der Einzelwirkstofffungizide bei protektiver Applikationsweise eine gute Wirksamkeit bereits bei 42 g/ha FQC plus 42,5 g/ha PPC (Kombination) ergibt. Bei kurativer Anwendung waren die geprüften binären Wirkstoffkombinationen nur moderat wirksam. Hinsichtlich der ternären Wirkstoffkombination Fluquinconazol (FQC), Propiconazol (PPC) plus Chlorthalonil (CTL) ergibt sich, dass bei der Tankmischung bei protektiver Anwendung bereits 21 g/ha FQC + 42,5g/ha PPC + 333 g/ha CTL (Kombination 8) ausreichend waren, um eine gute Wirksamkeit zu erzielen. Bei kurativer Anwendung waren allerdings 84 g/ha FQC + 85 g/ha PPC + 665 g/ha CTL (Kombination 5) nötig, um eine gute Wirksamkeit zu erzielen.

Erfindungsgemäße Formulierungen waren dabei immer wirksamer als die Tankmischungen gleicher Wirkstoffmengen/ha.

Input Classic (0,9 L/ha, Behandlung 2) zeigte Wirksamkeiten von 92 % (protektiv) und 82 % (kurativ). Um dieses Leistungsniveau zu erreichen, waren als Formulierung protektiv angewendet 42 g/ha FQC + 85 g/ha PPC + 665 g/ha CTL (Kombination 6) notwendig, bei kurativer Anwendung waren 42 g/ha FQC + 42,5 g/ha PPC + 333 g/ha CTL (Kombination 7) ausreichend.

### 2.2 Untersuchungen zur Blattflecken-Krankheit an Gerste

Eine Kultur des langsam wachsenden Pilzes *Rhynchosporium secalis* (bereitgestellt von Dr. Adrian Newton, The James Hutton Institute, Invergowrie, Schottland) wurde über 21 Tage auf V8-Saft-Agar bei 20 °C bei einer Lichtintensität von 50 µmol m⁻² s⁻¹ angezogen. Es wurden Platten mit einer dicken Schicht Anzuchtmedium verwendet. In diesem Stadium hatten die Pilzkolonien einen Durchmesser von ungefähr 15-20 mm erreicht. Teilmengen (500 µl) sterilen destillierten Wassers wurden zu jeder Platte hinzugegeben und die Pilzkolonien wurden mit einem sterilen Plastikspatel über die Oberfläche des angefeuchteten Agars verteilt. Sie wurden dann für weitere 28 Tage unter denselben Bedingungen inkubiert, um die Bildung von Konidien anzuregen. In diesem Stadium wurden Konidien von Platten gewonnen durch Zugabe von sterilem destilliertem Wasser (enthaltend 0,01 % Tween 20) und Abschaben zur Freisetzung von Sporen. Die erhaltene Suspension wurde durch vier Schichten sterilen Musselins filtriert, um Mycelbruchstücke zu entfernen, und die Konzentration wurde nach Zählung der Sporen unter Zuhilfenahme eines Hämocytometers durch geeignete Verdünnung auf 10⁵ Konidien pro mL eingestellt. Dadurch wurde das Inokulum für die Untersuchungen gewonnen.

Samen der hochempfindlichen Sommergersten-Varietät "Waggon" wurden in Levington-M3-Kompost angepflanzt. Insgesamt 12 Samen wurden pro 9-cm-Topf (164 Töpfe) gepflanzt und bis zum Stadium 12 angezogen. Die Pflanzen wurden in einem Raum mit kontrollierter Umgebung untergebracht, mit einer Tagestemperatur von 20 °C und einer Nachttemperatur von 15 °C, mit einer 16-h-Fotoperiode, bei einer fotosynthetischen Photonenflussdichte von ungefähr 200 µmol m⁻²s⁻¹. Im Wachstumsstadium 12 wurde die erforderliche Population der protektiv mit Fungiziden nach dem aus Tabelle 4 ersichtlichen Schema gespritzt. Alle Fungizide wurden unter Verwendung eines kalibrierten Handdrucksprühers bei der äquivalenten Rate von 200 L Wasser pro Hektar appliziert. Dies wurde erreicht durch Platzieren von zu behandelnden Pflanzen auf einer 1-m²-Fläche und Applizieren von 20 mL Fungizid-Sprays. Unbehandelte Pflanzen dienten als Kontrolle. Vier parallele Töpfe wurden pro Behandlung verwendet und die Behandlungen wurden innerhalb des Anzuchtraums randomisiert.

Am Tag nach der protektiven Fungizid-Applikation wurden sämtliche Pflanzen mit wie oben beschrieben gewonnenen Konidien des Pathogens durch Besprühen mit der eingestellten Suspension bis kurz vor den Ablauf inokuliert. Die Töpfe wurden für 2 Tage in Anzuchtkästen angeordnet, um 100 % Luftfeuchtigkeit aufrechtzuerhalten und um sicherzustellen, dass Konidien enthaltendes freies Wasser auf den Blättern verblieb. Sieben Tage nach Inokulation erhielt der andere Teil der Pflanzenpopulation eine kurative Spritzung. Auswertungen wurden 20-21 Tage nach Inokulation durchgeführt, indem die Fläche von 30 zufällig ausgewählten inokulierten Blättern (Blätter 1 und 2) bewertet wurde, die Infektion zeigten. Die Pflanzen wurden in zufälliger Reihenfolge anhand eines Schlüssels bewertet, der die Blattflächeninfektion als 0, 1, 5, 10, 25, 50 oder 75 % Blattflecken läsionen aufweisend einstufte.

Die Ergebnisse hinsichtlich der Wirksamkeit erfindungsgemäßer binärer Mischungen aus Fluquinconazol und Propiconazol sowie ternärer Gemische aus Fluquinconazol, Propiconazol und Chlorthalonil bei der Bekämpfung der Blattfleckenkrankheit bei Gerste sind in Tabelle 8 zusammengefasst.

**Tabelle 8: Wirksamkeit (% Befallsreduktion gegenüber der Kontrolle) erfindungsgemäßer Wirkstoffkombinationen als Tankmischung oder Formulierung gegen Blattfleckenkrankheit bei Gerste. FQC = Fluquinconazol, CTL = Chlorthalonil, PPC = Propiconazol, TM = Tankmischung, F = Formulierung.**

| | | | | Wirksamkeit (%) | | | |
|---|---|---|---|---|---|---|---|
| | Wirkstoffmengen (g/ha) | | | Protektiv | | Kurativ | |
| Erfindungsgemäße Kombination (Behandlung(en)) | FQC | PPC | CTL | TM | F | TM | F |
| 1 (10) | 84 | 85 | - | 81 | - | 68 | - |
| 2 (11) | 42 | 85 | - | 77 | - | 64 | - |
| 3 (12) | 42 | 42,5 | - | 65 | - | 55 | - |
| 4 (13) | 21 | 42,5 | - | 63 | - | 51 | - |
| 5 (F=19, TM=20) | 84 | 85 | 665 | 93 | 94 | 70 | 68 |
| 6 (F=21, TM=22) | 42 | 85 | 665 | 88 | 89 | 66 | 67 |
| 7 (F=23, TM=24) | 42 | 42,5 | 333 | 75 | 76 | 53 | 54 |
| 8 (F=25, TM=26) | 21 | 42,5 | 333 | 55 | 57 | 46 | 54 |

Zur binären Wirkstoffkombination FQC + PPC ergibt sich aus Tabelle 8 für Tankmischungen der Einzelwirkstoffe bei protektiver Applikationsweise eine gute Wirksamkeit bei 84 g/ha FQC + 85 g/ha PPC (Kombination 1). Die getesteten binären Wirkstoffkombinationen waren bei kurativer Anwendung nur moderat wirksam.

Mit Bezug auf die ternäre Wirkstoffkombination FQC + PPC + CTL für die Tankmischung waren bei protektiver Anwendung 42 g/ha FQC + 85g/ha PPC + 665 g/ha CTL (Kombination 6) ausreichend, um eine gute Wirksamkeit zu erzielen. Bei kurativer Anwendung erreichte keine der geprüften Wirkstoffkombinationen eine gute Wirksamkeit. Die Formulierungen waren in der Regel etwas wirksamer als die Tankmischungen gleicher Wirkstoffmengen, wobei der Unterschied allerdings geringer ausfällt als bei den Ergebnissen für die Blattseptoria.

Um das Leistungsniveau von "Input Classic" zu erreichen, waren als Formulierung protektiv angewendet 42 g/ha FQC + 85 g/ha PPC + 665 g/ha CTL (Kombination 6) notwendig. Keine der geprüften Aufwandmengen der Formulierungen erreichte die Wirksamkeit von Input Classic.

Zur Verbesserung der Übersichtlichkeit werden nachfolgend nochmals die vorstehend bereits im Detail diskutierten Wirkstoffe aufgeführt und mit jeweils typischen Applikationsvarianten zusammengefasst.
a. Fluquinconazol (FQC), CAS xy: Triazol, akropetaler und translaminarer Transport, single-side- inhibitor, protektive und kurative Wirkung
b. Propiconazol (Propi), CAS xy, Triazol, akropetaler und translaminarer Transport, single-side-inhibitor, protektive und kurative Wirkung
c. Chlorthalonil (CTL), CAS xy, Chloronitril, Belagsfungizid, multi-side-inhibitor, protektive Wirkung.

Es bedeuten hierbei:
akropetal: aufwärtsgerichteter Transport im Wasserstrom, bzw. Xylem der Pflanze
translaminar: Transport innerhalb des Blattes, bspw. von der Blattoberseite zur Blattunterseite
protektiv: bei protektiver Wirksamkeit eines Fungizides muss sich das Fungizid auf der Pflanzenoberflächen befinden, bevor ein Krankheitserreger die Pflanze befällt.
Kurativ: bei kurativer Wirksamkeit kann ein Fungizid nach erfolgter Infektion aber vor dem Ausbruch der Symptome (d.h. in der Latenzzeit des Erregers) appliziert werden.

Single-side inhibitor: ein Pflanzenschutzmittel-Wirkstoff, der einen ganz spezifischen Angriffspunkt in der Physiologie des Schadpathogens hat. Single-side-inhibitoren sind in der Regel stark resistenzgefährdent.

Multi-side inhibitor: ein Pflanzenschutzmittel-Wirkstoff der an vielen, verschiedenen, essentiellen Anriffpunkten in der Physiologie des Schadpathogens angreift. Multi-side Inhibitoren sind in der Regel nicht resistenzgefährdet und dienen daher als Baustein einer Anti-Resistenz-Strategie.

Typische Wirkstoffkombination und typische maximale Aufwandmengen / Anwendung an Wirkstoffen sind:
a. Fluquinconazol (125 g/ha) + Propicoanzol (125 g/ha)
b. Fluquinconazol (125 g/ha) + Propicoanzol (125 g/ha) + Chlorthalonil (1000 g/ha)

Die folgenden drei Formulierungen erwiesen sich als besonders wirkungsvoll: SPU Code-Nr. SPU 06330-F-0-EC, ein Emulsionskonzentrat, Formrlierungscode: EC, weiterhin SPU Code-Nr. SPU 05880-F-0-SE, sowie SPU 05890-F-0-SE, beide Formulierungen sind Suspo-Emulsionen, Formulierungscode: SE
a. SPU 06330-F-0-EC: 80 g/L Fluquinc. + 125 g/L Propiconazol (Duomix)
b. SPU 05880-F-0-SE: 42 g/L Fluquinc. + 42 g/L Propic. + 333 g/L Chlorthalonil (Trimix 1)
c. SPU 05890-F-0-SE: 21 g/L Fluquinc. + 42 g/L Propic. + 333 g/L Chlorthalonil (Trimix 2)

Typische Zielaufwandmenge ist 1 L/ha für SPU 06330-F-0-EC (Duomix), sowie jeweils 3 l/ha für SPU 05880-F-0-SE sowie SPU 05890-F-0-SE.

Folgende typische Zielorganismen (targets) für die Wirkstoffkombination können aufgelistet werden:
a. Blattseptoria (Mycosphaerella graminicola / Septoria tritici) an Weizen, Triticale
b. Rost-Arten (an allen Getreidearten, siehe 2.)
c. Netzflecken (Drechslera teres) an Gerste
d. Blattflecken (Rhynchosporium secalis) an Gerste und Roggen
e. DTR (Drechslera tritici-repentis) an Weizen und Triticale
f. Ramularia-Blattflecken (Ramularia collo-cygni) an Gerste
g. Echter Mehltau (Blumeria graminis) an allen Getreidearten

Folgende Gewächshausuntersuchungen zum Wirkungsspe'ktrum von formulierten Einzelwirkstoff-fungiziden wurden durchgeführt.

Die maximal getesteten Aufwandmengen der Wirkstoffe pro ha orientierten sich an den im Rahmen der europäischen Wirkstoffzulassung geprüften sicheren Anwendung der Beispiel-formulierungen.

Anerkannter Bewertungsschlüssel bei Fungiziden: 100-80% Bekämpfungserfolg= gut wirksam, 79-60% Bekämpfungserfolg= moderat wirksam, 59-40% Bekämpfungserfolg= Befallsreduktion.

### Ergebnisse:

Wirksamkeit [%] der formulierten Einzelwirkstoffe bei maximaler Wirkstoffmenge/ha
a. Fluquinconazol 125 g/ha:

| Fluquinconazol | Blattseptoria | Rost | Netzflecken | Blattflecken | DTR |
|---|---|---|---|---|---|
| Protektiv | 86 | 85 | 36 | 58 | 46 |
| Kurativ | 77 | 72 | 27 | 31 | 32 |

Die Stärken von Fluquincoanzol lagen in der Bekämpfung der Blattseptoria und kurativ in der Bekämpfung von Rostkrankheiten
b. Propiconazol 125 g/ha:

| Propiconazol | Blattseptoria | Rost | Netzflecken | Blattflecken | DTR |
|---|---|---|---|---|---|
| protektive | 72 | 91 | 77 | 63 | 82 |
| Kurativ | 65 | 82 | 69 | 38 | 71 |

Die Stärken von Propiconazol lagen in der Bekämpfung von Rostkrankheiten, DTR und Netzflecken.
c. Chlorthalonil 1000 g/ha:

| Chlorthalonil | Blattseptoria | Rost | Netzflecken | Blattflecken | DTR |
|---|---|---|---|---|---|
| protektiv | 85 | 84 | 47 | 39 | 28 |

Die Stärken von Chlorothalonil lagen in der protektiven Bekämpfung von Blattseptoria und Rostkrankheiten.

Folgende Gewächshausuntersuchungen zur Wirksamkeit verschiedener Tankmischungen von Einzelwirkstofffungiziden u.a. im Vergleich zu den entwickelten Formulierungen SPU 05880 / 05890 / SPU 06330 wurden durchgeführt.

Testorganismen waren Blattseptoria (vgl. Anlage "Activity of SBI fungicides .... against Mycosphaerella graminicola (Septoria tritici...2014 (Trimix) sowie 2016 (Duomix).") sowie Blattflecken (vgl. Anlage "Activity of SBI fungicides .... against Rhynchsporium secalis ...2014 (Trimix) sowie 2016 (Duomix).").

Anerkannter Bewertungsschlüssel bei Fungiziden: 100-80% Bekämpfungserfolg= gut wirksam, 79-60% Bekämpfungserfolg= moderat wirksam, 59-40% Bekämpfungserfolg= Befallsreduktion.

Das Fungizid Input classic kann als das derzeit wirksamste Fungizid im Getreidebau angesehen werden und ist damit "state of the art". Die Aufwandmengen von Input classic orientieren sich an den praktischen Aufwandmengen je Getreideart (Weizen oder Gerste), nicht an den zugelassenen Aufwandmengen.

### Ergebnisse:

a. Wirksamkeit verschiedener Wirkstoffmengen und -kombinationen als Tankmischung und (teilweise) als Formulierung gegen Blattseptoria im Duomix.

| Wirkstoff-Aufwandmengen in g/ha | | | | Wirksamkeit [%] Tankmischung / Formulierung | |
|---|---|---|---|---|---|
| | | | | protektiv | Kurativ |
| | Input classic 0,9 l/ha | | | 92 | 83 |
| Kombinat. | FQC | Propi | CTL | | |
| 1 | 80 | - | - | 83 | 71 |
| 2 | 52 | - | - | 77 | 65 |
| 3 | - | 125 | - | 77 | 58 |
| 4 | - | 82,5 | - | 71 | 49 |
| 5 | - | - | 500 | 76 | - |
| 6 | 80 | 125 | - | 86 / 92 | 79 / 85 |
| 7 | 52 | 62,5 | - | 82 / 88 | 74 / 80 |
| 8* | 52 | 62,5 | 500 | 90 | - |

| | | | | | |
|---|---|---|---|---|---|
| * = Formulierung (FQC+Propi) + CTL in Tankmischung | | | | | |

i. Einzelwirkstoffe:
   a. Fluquinconazol war in den geprüften Wirkstoffmengen wirksamer gegenüber Blattseptoria als Propicoanzol oder Chlort-halonil.
   b. Die protektive Anwendung der Fungizide war bei den Triazolen (FQC, Propi) immer wirkungsvoller als die kurative Anwendung
ii. Wirkstoffkombinationen und Formulierung:
   a. In der Tankmischung von Fluquinconazol und Propiconazol war die additive Wirkung beider Wirkstoffe gegeben aber gering, vgl. Kombination 1+3 zu 6. Das gleiche gilt für Chlorthalonil, vgl. Kombination 5+7 zu 8.
   b. Die Formulierung aus Fluquinconazol + Propicoanzol war der Tankmischung immer überlegen.
   c. Bereits 50 g/ha Fluquinconazol + 62,5 g/ha Propiconazol richten in der Formulierung für eine gute Wirksamkeit aus (Kombination 7).
   d. Mit der hohen Aufwandmenge der Formulierung aus Fluquinconazol + Propicoanzol konnte das Leistungsniveau von Input classic (benchmark) erreicht werden
b. Wirksamkeit verschiedener Wirkstoffmengen und -kombinationen im Trimix als Tankmischung und (teilweise) als Formulierung gegen Blattseptoria im Trimix.

| Wirkstoff-Aufwandmengen in g/ha | | | | Wirksamkeit [%] Tankmischung / Formulierung | |
|---|---|---|---|---|---|
| | | | | protektiv | Kurativ |
| | Input classic 0,9 l/ha | | | 92 | 82 |
| Kombinat. | FQC | Propi | CTL | | |
| 1 | 84 | 85 | - | 88 / - | 78 / - |
| 2 | 42 | 85 | - | 81 / - | 71 / - |
| 3 | 42 | 42,5 | - | 81 / - | 69 / - |
| 4 | 21 | 42,5 | - | 72 / - | 58 / - |
| 5 | 84 | 85 | 665 | 95 / 98 | 80 / 87 |
| 6 | 42 | 85 | 665 | 87 / 93 | 70 / 76 |
| 7 | 42 | 42,5 | 333 | 82/91 | 78 / 83 |
| 8 | 21 | 42,5 | 333 | 84 / 86 | 60 / 66 |

i. Wirkstoffkombination FQC + Propi:
   a. In Tankmischungen der Einzelwirkstoffungizide ergaben sich bei protektiver Applikationsweise ein gute Wirksamkeit bereits bei 42 g/ha FQC + 42,5 g/ha Propi (Kombi 3). Alle geprüften Wirkstoff-kombination waren bei kurativer Anwendung nur moderat wirksam.
ii. Wirkstoffkombination FQC + Propi + CTL:
   a. In der Tankmischung waren bei protektiver Anwendung bereits 21 g/ha FQX+42,5g/ha Propi + 333 g/ha CTL (Kombi 8) ausreichen, um eine gute Wirksamkeit zu erzielen. Bei kurativer Anwendung waren allerdings 84 g/ha FQC + 85 g/ha Propi + 665 g/ha CTL (Kombi 5) nötig, um eine gute Wirksamkeit zu erzielen.
   b. Die Formulierungen waren immer wirksamer als die Tankmischungen gleicher Wirkstoffmengen/ha.
   c. Um das Leistungsniveau von Input classic (=benchmark) zu erreichen, waren als Formulierung protektiv angewendet 42 g/ha FQC+85 g/ha Propi + 665 g/ha CTL (Kombi 6) notwendig, bei kurativer Anwendung waren 42 g/ha FQC+42,5 g/ha Propi + 333 g/ha CTL (Kombi 7) ausreichend.
c. Wirksamkeit verschiedener Wirkstoffmengen und -kombinationen als Tankmischung und (teilweise) als Formulierung gegen Blattflecken im Duomix

| Wirkstoff-Aufwandmengen in g/ha | | | | Wirksamkeit [%] Tankmischung / Formulierung | |
|---|---|---|---|---|---|
| | | | | protektiv | Kurativ |
| | Input classic 0,75 l/ha | | | 87 | 72 |
| Kombinat. | FQC | Propi | CTL | | |
| 1 | 80 | - | - | 59 | 48 |
| 2 | 52 | - | - | 55 | 36 |
| 3 | - | 125 | - | 78 | 65 |
| 4 | - | 82,5 | - | 70 | 55 |
| 5 | - | - | 500 | 50 | - |
| 6 | 80 | 125 | - | 85 / 88 | 69 / 76 |
| 7 | 52 | 62,5 | - | 68 / 73 | 61 /67 |
| 8* | 52 | 62,5 | 500 | 81 | - |

| | | | | | |
|---|---|---|---|---|---|
| * = Formulierung (FQC+Propi) + CTL in Tankmischung | | | | | |

i. Einzelwirkstoffe:
   a. Propiconazol war in den geprüften Wirkstoffmengen wirksamer gegenüber Blattflecken als Fluquincoanzol oder Chlorthalonil.
   b. Die protektive Anwendung der Fungizide war bei den Triazolen (FQC, Propi) immer wirkungsvoller als die kurative Anwendung
ii. Wirkstoffkombinationen und Formulierung:
   a. In der Tankmischung von Fluquinconazol und Propiconazol war die additive Wirkung beider Wirkstoffe gegeben aber gering, vgl. Kombination 1+3 zu 6. Das gleiche gilt für Chlorthalonil, vgl. Kombination 7+5 zu 8.
   b. Die Formulierung aus Fluquinconazol + Propicoanzol war der Tankmischung immer überlegen.
   c. Mit der hohen Aufwandmenge der Formulierung aus Fluquinconazol + Propicoanzol konnte das Leistungsniveau von Input classic (benchmark) erreicht werden.
d. Wirksamkeit verschiedener Wirkstoffmengen und -kombinationen als Tankmischung und (teilweise) als Formulierung gegen Blattflecken im Trimix

| Wirkstoff-Aufwandmengen in g/ha | | | | Wirksamkeit [%] Tankmischung / Formulierung | |
|---|---|---|---|---|---|
| | | | | protektiv | Kurativ |
| Input classic 0,75 l/ha | | | | 88 | 74 |
| Kombinat. | FQC | Propi | CTL | | |
| 1 | 84 | 85 | - | 81 /- | 68 / - |
| 2 | 42 | 85 | - | 77 / - | 64 / - |
| 3 | 42 | 42,5 | - | 65 / - | 55 / - |
| 4 | 21 | 42,5 | - | 63 / - | 51 / - |
| 5 | 84 | 85 | 665 | 93 / 94 | 70 / 68 |
| 6 | 42 | 85 | 665 | 88 / 89 | 66 / 67 |
| 7 | 42 | 42,5 | 333 | 75 / 76 | 53 / 54 |
| 8 | 21 | 42,5 | 333 | 55 / 57 | 46 / 54 |

i. Wirkstoffkombination FQC + Propi:
   a. In Tankmischungen der Einzelwirkstoffe ergab sich bei protektiver Applikationsweise ein gute Wirksamkeit bei 84 g/ha FQC + 85 g/ha Propi (Kombi 1). Alle getesteten Wirkstoffkombinationen waren bei kurativer Anwendung nur moderat wirksam.
ii. Wirkstoffkombination FQC + Propi + CTL:
   a. In der Tankmischung waren bei protektiver Anwendung 42 g/ha FQX+85g/ha Propi + 665 g/ha CTL (Kombi 6) ausreichend, um eine gute Wirksamkeit zu erzielen. Bei kurativer Anwendung hatte keine der geprüften Wirkstoffkombinationen eine gute Wirksamkeit.
   b. Die Formulierungen waren in der Regel etwas wirksamer als die Tankmischungen gleicher Wirkstoffmengen, wobei der Unterschied deutlich geringer ausfällt als bei Ergebnisse der Blattseptoria.
   c. Um das Leistungsniveau von Input classic (=benchmark) zu erreichen, waren als Formulierung protektiv angewendet 42 g/ha FQC+85 g/ha Propi + 665 g/ha CTL (Kombi 6) notwendig. Keine geprüfte Aufwandmengen der Formulierungen erreichte die Wirksamkeit von Input classic.

Die umfangreichen Arbeiten zum Wirkungsspektrum der getesteten fungiziden Wirkstoffezeigen, dass sich die Wirkstoffe Fluquincoanzol + Propiconazol ergänzen und zusammen ein breites Spektrum an Blattkrankheiten des Getreides sowohl protektiv als auch kurativ bekämpfen können. Hervorzuheben ist die gute Wirksamkeit gegenüber Blattseptoria, die in den letzten Jahren eine Vielzahl von weniger sensitiven Pathotypen gegenüber Triazol-Fungiziden ausgebildet hat, die mit vielen alten Triazolwirkstoffen nicht mehr ausreichend zu bekämpfen sind.

In der Dreierkombination von Fluquinconazol + Propiconazol + Chlorthalonil erweitert der Wirkstoff Chlorthalonil einerseits das Wirkungsspektrum um die Bekämpfung von Ramularia collo-cygni an Gerste, andererseits wird die protektiven Wirksamkeit gegenüber der Blatt-septoria signifikant gesteigert.

Eine dritte Funktion von Chlorthalonil besteht in der Verminderung, Verlangsamung der Ausbildung von Resistenzen gegenüber Triazolen (Mehltau, Blattseptoria) sowie anderen Wirkstoffgruppen (Strobilurinen, Carboxamide), wenn diese Formulierung in Tank-mischungen mit Fungiziden aus anderen resistenzgefährdeten Wirkstoffklassen ausgebracht wird.

Wirkungsschwerpunkte der fungiziden Wirkstoffkombination aus Fluquinconazol + Propiconazol, bzw. Fluquinconzol + Propiconazol + Chlorthalonil

| Wirkstoff | Blattseptoria | Roste | Netzflecken | Blattflecken | DTR | Ramularia |
|---|---|---|---|---|---|---|
| | prot./kurat. | prot./kurat. | prot./kurat. | prot./kurat. | prot./kurat. | prot./kurat. |
| Fluquin-conazol | xxx / xx | xxx / xx | - / - | x / - | x / - | ? / ? |
| Propiconazol | xx / xx | xxx / xxx | xx / xx | XX / - | xxx / xx | ? / ? |
| Chlorhtalonil | xxx / - | xxx / - | x / - | - / - | - / - | xxx / - |

| | | | | | | |
|---|---|---|---|---|---|---|
| Legende: xxx = gute Wirksamkeit, xx = moderate Wirksamkeit, x = Befallsreduktion, | | | | | | |

## Patentansprüche

1. Getreidefungizid, umfassend die fungiziden Wirkstoffe Fluquinconazol und Propiconazol.

2. Getreidefungizid nach Anspruch 1, ferner umfassend den fungiziden Wirkstoff Chlorthalonil.

3. Getreidefungizid nach Anspruch 1 oder 2, wobei das Gewichtsverhältnis von Fluquinconazol zu Propiconazol 0,25-1,5:1, bevorzugt 0,5-1,25:1, besonders bevorzugt 0,5-1:1 oder 1:1 beträgt.

4. Getreidefungizid nach einem der Ansprüche 2 oder 3, wobei das Gewichtsverhältnis von Fluquinconazol zu Propiconazol zu Chlorthalonil 0,25-1,5:1:5-10, bevorzugt 0,5-1,25:1:7-9, besonders bevorzugt 0,5-1:1:8 beträgt.

5. Getreidefungizid nach einem der vorhergehenden Ansprüche, wobei die fungiziden Wirkstoffe in Suspoemulsion vorliegen.

6. Getreidefungizid nach Anspruch 5, wobei der Massenanteil der fungiziden Wirkstoffe an der Suspoemulsion insgesamt mindestens 5 % beträgt.

7. Getreidefungizid nach Anspruch 5 oder 6, wobei die Suspoemulsion die fungiziden Wirkstoffe Fluquinconazol, Propiconazol und Chlorthalonil enthält, und wobei der Massenanteil von Fluquinconazol 1,5 bis 5 %, vorzugsweise 2-4,5 %, der Massenanteil von Propiconazol 1,5 bis 5 %, vorzugsweise 2-4,5 %, und der Massenanteil von Chlorthalonil 25-35 %, vorzugsweise 27-33 %, weiter bevorzugt 28-32 %, besonders bevorzugt 29-31 % beträgt.

8. Getreidefungizid nach einem der vorhergehenden Ansprüche, wobei das Getreidefungizid wirksam ist zur Vorbeugung oder Behandlung von Blattseptoria, Rost, Netzfleckenkrankheit, Blattfleckenkrankheit, DTR-Blattdürre oder Ramularia-Blattfleckenkrankheit.

9. Verfahren zur Anwendung an einer Getreidepflanze auf einer Kulturfläche, umfassend das Applizieren eines Getreidefungizids nach einem der Ansprüche 1 bis 8 auf die Getreidepflanze und/oder die Kulturfläche in einer Menge, die wirksam ist, um den Pilzbefall der Getreidepflanze zu verhindern oder im Vergleich zu einer unbehandelten Getreidepflanze zu vermindern.

10. Verfahren nach Anspruch 9, wobei die applizierte Menge Fungizid ausreichend ist, um im Vergleich zu einer unbehandelten Getreidepflanzenpopulation eine Minderung des Pilzbefalls um mindestens 60 %, vorzugsweise mindestens 70 % oder 75 %, besonders bevorzugt um mindestens 80 %, 85 % oder 90 % zu bewirken.

11. Verfahren nach Anspruch 9 oder 10, wobei a) ein Fluquinconazol und Propiconazol enthaltendes binäres Getreidefungizid appliziert wird, und wobei Fluquinconazol und Propiconazol jeweils, unabhängig voneinander, in einer maximalen Aufwandmenge von 125 g/ha, appliziert werden, und/oder b) ein Fluquinconazol, Propiconazol und Chlorthalonil enthaltendes ternäres Getreidefungizid appliziert wird, und wobei Fluquinconazol und Propiconazol jeweils, unabhängig voneinander, in einer maximalen Aufwandmenge von 125 g/ha appliziert werden und Chlorthalonil in einer maximalen Aufwandmenge von 1000 g/ha appliziert wird.

12. Verfahren nach Anspruch 11, wobei a) ein Fluquinconazol und Propiconazol enthaltendes binäres Getreidefungizid appliziert wird, und wobei Fluquinconazol und Propiconazol jeweils, unabhängig voneinander, in einer Aufwandmenge von 20-125 g/ha, bevorzugt 40-125 g/ha, weiter bevorzugt von 60-125 g/ha, besonders bevorzugt von 80-125 g/ha oder 85-125 g/ha appliziert werden, und/oder b) ein Fluquinconazol, Propiconazol und Chlorthalonil enthaltendes ternäres Getreidefungizid appliziert wird, und wobei Fluquinconazol und Propiconazol jeweils, unabhängig voneinander, in einer Aufwandmenge von 20-125 g/ha, bevorzugt 40-125 g/ha, weiter bevorzugt von 60-125 g/ha, besonders bevorzugt von 80-125 g/ha oder 85-125 g/ha appliziert werden und Chlorthalonil in einer Aufwandmenge von 300-1000 g/ha, vorzugsweise 600-1000 g/ha, besonders bevorzugt von 650-1000 g/ha appliziert wird.

13. Verfahren nach einem der Ansprüche 9 bis 12, wobei die Getreidepflanze eine Pflanze ist, die ausgewählt ist aus den Gattungen Triticum, Secale, Hordeum, Oryza, Zea, Avena, Sorghum, Panicum, Pennisetum, Setaria, Eleusine und Eragrostis.

14. Verfahren nach Anspruch 13, wobei die Getreidepflanze Winter- oder Sommerweizen, Winter- oder Sommergerste, Winter oder Sommerroggen, Winter- oder Sommertriticale, Winter- oder Sommerhafer, Hartweizen, Dinkel oder Emmer ist.

15. Verwendung einer Fluquinconazol und Propiconazol sowie optional Chlorthalonil umfassenden Zusammensetzung zum Schutz von Getreide vor Pilzbefall.
